# EUROPÄISCHE PATENTSCHRIFT

(11) **EP 3 900 273 B1**
(45) Veröffentlichungstag und Bekanntmachung des Hinweises auf die Patenterteilung: **07.02.2024**
(21) Anmeldenummer: 19829093.4
(22) Anmeldetag: 17.12.2019
(51) Int. Cl.: H04L 12/40

(54) **TEILNEHMERSTATION FÜR EIN SERIELLES BUSSYSTEM UND VERFAHREN ZUR KOMMUNIKATION IN EINEM SERIELLEN BUSSYSTEM**
SUBSCRIBER STATION FOR A SERIAL BUS SYSTEM AND METHOD FOR COMMUNICATION IN A SERIAL BUS SYSTEM
STATION D'ABONNÉ POUR UN SYSTÈME DE BUS SÉRIE ET PROCÉDÉ DE COMMUNICATION DANS UN SYSTÈME DE BUS SÉRIE

(30) Priorität: 17.12.2018 DE 102018221961
(43) Veröffentlichungstag der Anmeldung: 27.10.2021
(73) Patentinhaber: Robert Bosch GmbH, 70442 Stuttgart (DE)
(72) Erfinder: HARTWICH, Florian, 72762 Reutlingen (DE); MUTTER, Arthur, 73765 Neuhausen (DE)
(86) Internationale Anmeldenummer: PCT/EP2019/085611
(87) Internationale Veröffentlichungsnummer: WO 2020/127235

(56) Entgegenhaltungen:
- DE-A1-102009 026 965
- DE-A1-102015 209 201
- US-A- 6 052 753
- US-A1- 2017 147 812

## Beschreibung

### Technisches Gebiet

Die vorliegende Erfindung betrifft eine Teilnehmerstation für ein serielles Bussystem und ein Verfahren zur Kommunikation in einem seriellen Bussystem, das mit hoher Datenrate sowie großer Flexibilität und großer Fehlerrobustheit arbeitet.

### Stand der Technik

Für die Kommunikation zwischen Sensoren und Steuergeräten, beispielsweise in Fahrzeugen, wird anstelle einer Punkt-zu-Punkt-Verbindung häufig ein Bussystem bevorzugt. Mit steigender Anzahl an Funktionen einer technischen Anlage bzw. eines Fahrzeugs, nimmt auch der Datenverkehr im Bussystem zu. Noch dazu wird stetig gefordert, dass die Daten schneller vom Sender zum Empfänger zu übertragen sind als bisher.

US 6,052,753 A offenbart einen fehlertoleranten Datenbus, der zum Einsatz in einem Flugzeug für ein integriertes System zur Fluggefährdungsvermeidung ausgestaltet ist. Das Bussystem hat mehrere parallele Busse, auf welchen Knoten des Bussystems jeweils einen Teil einer Nachricht seriell senden oder von diesem empfangen. Jede Nachricht ist in einem Zeitschlitz von mehreren zeitlich nacheinander angeordneten Zeitschlitzen zu übertragen, wobei alle Bits der Nachricht dieselbe Bitzeit haben. In einer im Knoten zuvor gespeicherten Tabelle ist festgelegt, welchen Zeitschlitz der Knoten zum Senden verwenden darf. Jede Nachricht enthält die Empfängeradresse. Das Bussystem benötigt keine Mastersynchronisierungsquelle.

Derzeit ist bei Fahrzeugen ein Bussystem in der Einführungsphase, in welchem Daten als Nachrichten im Standard ISO11898-I:2015 als CAN Protokoll-Spezifikation mit CAN FD übertragen werden. Die Nachrichten werden zwischen den Busteilnehmern des Bussystems, wie Sensor, Steuergerät, Geber, usw., übertragen.

Bei CAN FD ist einer der Vorteile, dass die Länge eines über den Bus übertragenen Rahmens dynamisch änderbar ist. Dies liegt zum einen daran, dass die Länge des Datenfelds zur Übertragung der Nutzdaten nicht immer gleich der maximal möglichen Länge von 64 Byte sein muss, sondern bei weniger zu übertragenden Nutzdaten entsprechend gekürzt werden kann. Dadurch wird der Bus nicht länger als notwendig durch eine der zu übertragenden Nachrichten blockiert.

Daher wird bei CAN FD die variable Datenfeldlänge in einem DLC-Feld angegeben. Tritt hier ein Bitfehler auf, kann es vorkommen, dass der Empfänger eine falsche Rahmenlänge dekodiert und daher die Prüfsumme (CRC = Cyclic Redundancy Check) an der falschen Stelle prüft. Ob ein Fehler anhand der Prüfsumme (CRC-Fehler) erkannt wird, ist dann Glückssache.

Ein weiterer Grund für die sich dynamisch ändernde Länge eines CAN FD Rahmens liegt in einer Bit- Stuffing- Regel. Gemäß dieser Regel ist in einer CAN FD Nachricht nach fünf gleichen Bits ein dazu inverses Bit einzufügen. Daher ist im Feld für die Prüfsumme (CRC- Feld) ein "Stuff- Bit-Zähler" notwendig, in welchem die Anzahl der dynamisch eingefügten Stuff-Bits eingetragen wird. Dieser "Stuff-Bit-Zähler" führt jedoch zu Komplexität und einem Überhang an Daten (Daten-Overhead). Dadurch sinkt die übertragbare Nettodatenrate, was die Kommunikation in dem Bussystem verlangsamt.

### Offenbarung der Erfindung

Daher ist es Aufgabe der vorliegenden Erfindung, eine Teilnehmerstation für ein serielles Bussystem und ein Verfahren zur Kommunikation in einem seriellen Bussystem bereitzustellen, welche die zuvor genannten Probleme lösen. Insbesondere sollen eine Teilnehmerstation für ein serielles Bussystem und ein Verfahren zur Kommunikation in einem seriellen Bussystem bereitgestellt werden, bei welchen die Nachteile der Prüfsummenabsicherung nicht auftreten, so dass bei großer Flexibilität und mit großer Fehlerrobustheit der Kommunikation eine hohe Datenrate und eine Steigerung der Menge der Nutzdaten pro Rahmen realisiert werden kann.

Die Aufgabe wird durch eine Teilnehmerstation für ein serielles Bussystem mit den Merkmalen von Anspruch 1 gelöst. Die Teilnehmerstation hat eine Kommunikationssteuereinrichtung zum Steuern einer Kommunikation der Teilnehmerstation mit mindestens einer anderen Teilnehmerstation des Bussystems, und eine Sende-/Empfangseinrichtung zum Senden eines von der Kommunikationssteuereinrichtung erzeugten Sendesignals auf einen Bus des Bussystems, so dass sich für eine Nachricht, die zwischen Teilnehmerstationen des Bussystems ausgetauscht wird, die Bitzeit eines in der ersten Kommunikationsphase auf den Bus gesendeten Signals unterscheidet von einer Bitzeit eines in der zweiten Kommunikationsphase gesendeten Signals, wobei die Kommunikationssteuereinrichtung ausgestaltet ist, das Sendesignal gemäß einem Rahmen zu erzeugen, in dem ein Feld für eine Kopfprüfsumme und ein Feld für eine Rahmenprüfsumme vorgesehen ist, wie in Anspruch 1 beschrieben.

Aufgrund der Ausgestaltung der Teilnehmerstation wird in einem Rahmen, der auf dem Bus übertragen wird, um Nachrichten zwischen den Teilnehmerstationen des Bussystems auszutauschen, ein Feld abgesichert, dass die Länge des Rahmens enthält. Dadurch ist immer die korrekte Länge des Rahmens sichergestellt. Dadurch kann ein Empfänger des Rahmens immer die richtige Rahmenlänge dekodieren und daher die Prüfsumme (CRC = Cyclic Redundancy Check) am Ende des Rahmens an der richtigen Stelle prüfen. Dadurch können Fehler bei der Kommunikation im Bussystem schnell und sicher aufgedeckt werden. Das bedeutet, dass die Restfehlerwahrscheinlichkeit wesentlich gesenkt wird. Die Restfehlerwahrscheinlichkeit gibt an, wie wahrscheinlich es ist, dass ein Rahmen trotz Fehlers als korrekt akzeptiert wird.

Darüber hinaus ist für die mit der Teilnehmerstation ausgeführte Absicherung der Länge des Rahmens kein"Stuff-Bit-Zähler" notwendig. Dies reduziert die Komplexität der Erstellung eines Rahmens bei der sendenden Teilnehmerstation und die Komplexität der Auswertung eines Rahmens in einer empfangenden Teilnehmerstation sowie den Überhang an zu übertragenden Daten (Daten-Overhead). Dadurch steigt die übertragbare Nettodatenrate, was die Kommunikation in dem Bussystem beschleunigt.

Als Folge davon kann mit der Teilnehmerstation auch bei Steigerung der Menge der Nutzdaten pro Rahmen ein Senden und Empfangen der Rahmen mit großer Flexibilität im Hinblick auf aktuelle Ereignisse im Betrieb des Bussystems und mit geringer Fehlerquote gewährleistet werden.

Hierbei ist es mit der Teilnehmerstation in dem Bussystem insbesondere möglich, in einer ersten Kommunikationsphase eine von CAN bekannte Arbitration beizubehalten und dennoch die Übertragungsrate gegenüber CAN oder CAN FD nochmals beträchtlich zu steigern.

Das von der Teilnehmerstation durchgeführte Verfahren kann auch zum Einsatz kommen, wenn in dem Bussystem auch mindestens eine CAN-Teilnehmerstation und/oder mindestens eine CAN FD Teilnehmerstation vorhanden ist, die Nachrichten nach dem CAN-Protokoll und/oder CAN FD Protokoll senden.

Vorteilhafte weitere Ausgestaltungen der Teilnehmerstation sind in den abhängigen Ansprüchen angegeben.

Denkbar ist, dass der für die Nachricht gebildete Rahmen kompatibel zu CAN FD aufgebaut ist.

Die Kommunikationssteuereinrichtung ist ausgestaltet, in dem Rahmen einen Identifizierer vorzusehen, welcher die Priorität zum Senden der zugehörigen Nachricht auf den Bus angibt, wie in Anspruch 1 beschrieben, wobei die Anzahl der Bits für den Identifizierer frei wählbar ist.

Möglich ist, dass in der ersten Kommunikationsphase ausgehandelt wird, welche der Teilnehmerstationen des Bussystems in der nachfolgenden zweiten Kommunikationsphase einen zumindest zeitweise exklusiven, kollisionsfreien Zugriff auf den Bus bekommt.

Die zuvor genannte Aufgabe wird zudem durch ein Verfahren zur Kommunikation in einem seriellen Bussystem nach Anspruch 7 gelöst. Das Verfahren wird mit einer Teilnehmerstation des Bussystems ausgeführt, die eine Kommunikationssteuereinrichtung und eine Sende-/Empfangseinrichtung aufweist, wobei das Verfahren die Schritte aufweist, Steuern, mit der Kommunikationssteuereinrichtung einer Kommunikation der Teilnehmerstation mit mindestens einer anderen Teilnehmerstation des Bussystems, und Senden, mit der Sende-/Empfangseinrichtung, eines von der Kommunikationssteuereinrichtung erzeugten Sendesignals auf einen Bus des Bussystems, so dass sich für eine Nachricht, die zwischen Teilnehmerstationen des Bussystems ausgetauscht wird, die Bitzeit eines in der ersten Kommunikationsphase auf den Bus gesendeten Signals unterscheidet von einer Bitzeit eines in der zweiten Kommunikationsphase gesendeten Signals, wobei die Kommunikationssteuereinrichtung das Sendesignal gemäß einem Rahmen erzeugt, in dem ein Feld für eine Kopfprüfsumme und ein Feld für eine Rahmenprüfsumme vorgesehen ist, wie in Anspruch 7 beschrieben.

Das Verfahren bietet dieselben Vorteile, wie sie zuvor in Bezug auf die Teilnehmerstation genannt sind.

Vorteilhafte weitere Ausgestaltungen des Verfahrens sind in den abhängigen Ansprüchen angegeben.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus einer Nachricht, die von einer Teilnehmerstation des Bussystems gemäß dem ersten Ausführungsbeispiel gesendet werden kann;
Fig. 3 ein vereinfachtes schematisches Blockschaltbild einer Teilnehmerstation des Bussystems gemäß dem ersten Ausführungsbeispiel;
Fig. 4 einen zeitlichen Verlauf von Bussignalen CAN-FX_H und CAN-FX_L bei der Teilnehmerstation gemäß dem ersten Ausführungsbeispiel;
Fig. 5 einen zeitlichen Verlauf einer Differenzspannung VDIFF der Bussignale CAN-FX_H und CAN-FX_L bei der Teilnehmerstation gemäß dem ersten Ausführungsbeispiel; und
Fig. 6 ein Schaubild zur Veranschaulichung des Aufbaus einer Nachricht, die von einer Teilnehmerstation des Bussystems gemäß einem zweiten Ausführungsbeispiel gesendet werden kann; und
Fig. 7 ein Schaubild zur Veranschaulichung des Aufbaus einer Nachricht, die von einer Teilnehmerstation des Bussystems gemäß einem dritten Ausführungsbeispiel gesendet werden kann.
Fig. 8 ein Schaubild zur Veranschaulichung eines weiteren Aspektes der Erfindung, nämlich der Einführung mehrerer Identifier im CAN FX Rahmen. In Fig. 8 ist dieser Aspekt aufbauend auf dem zuvor beschriebenen ersten Ausführungsbeispiel aus Fig. 2. dargestellt. In entsprechender Weise kann dieser Aspekt der Erfindung auch auf das zweite Ausführungsbeispiel - dargestellt in Fig. 6 - und das dritte Ausführungsbeispiel - dargestellt in Fig. 7 - angewendet werden.

In den Figuren sind gleiche oder funktionsgleiche Elemente, sofern nichts anderes angegeben ist, mit denselben Bezugszeichen versehen.

### Beschreibung der Ausführungsbeispiele

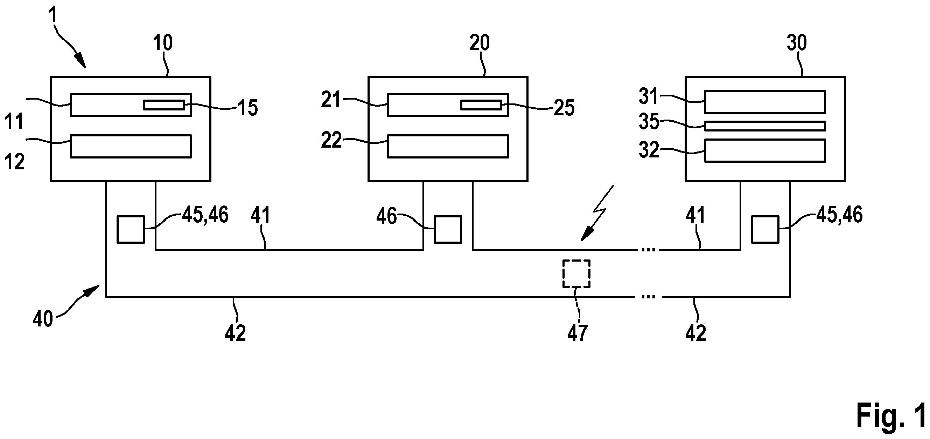

Fig. 1 zeigt als Beispiel ein Bussystem 1, das insbesondere grundlegend für ein CAN-Bussystem, ein CAN FD-Bussystem, ein CAN FX-Bussystem, und/oder Abwandlungen davon ausgestaltet ist, wie nachfolgend beschrieben. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L oder CAN-FX_H und CAN-FX_L genannt werden und dienen zur elektrischen Signalübertragung nach Einkopplung der dominanten Pegel bzw. Erzeugung von rezessiven Pegeln für ein Signal im Sendezustand. Über den Bus 40 sind Nachrichten 45, 46 in der Form von Signalen zwischen den einzelnen Teilnehmerstationen 10, 20, 30 seriell übertragbar. Tritt bei der Kommunikation auf dem Bus 40 ein Fehler auf, wie durch den gezackten schwarzen Blockpfeil in Fig. 1 dargestellt, kann optional ein Fehlerrahmen 47 (Error Flag) gesendet werden. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11, eine Sende-/Empfangseinrichtung 12 und eine Prüfsummeneinheit 15. Die Teilnehmerstation 20 hat eine Kommunikationssteuereinrichtung 21 eine Sende-/Empfangseinrichtung 22 und eine Prüfsummeneinheit 25. Die Teilnehmerstation 30 hat eine Kommunikationssteuereinrichtung 31, eine Sende-/Empfangseinrichtung 32 und eine Prüfsummeneinheit 35. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

Die Kommunikationssteuereinrichtungen 11, 21, 31 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

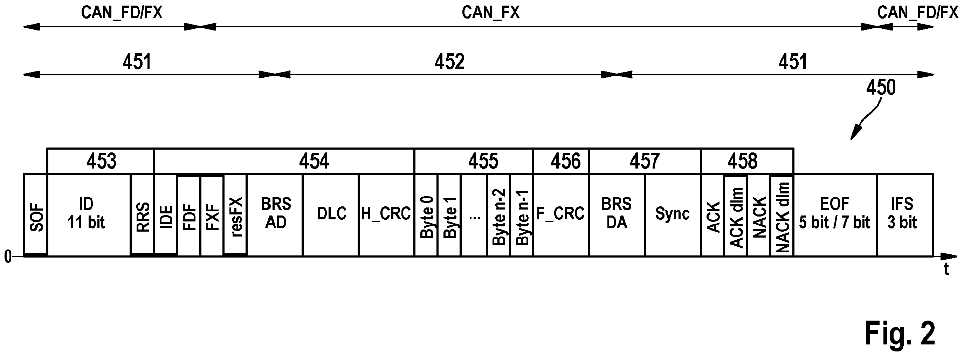

Die Kommunikationssteuereinrichtungen 11, 31 erstellen und lesen erste Nachrichten 45, die beispielsweise modifizierte CAN Nachrichten 45 sind. Hierbei sind die modifizierten CAN Nachrichten 45 auf der Grundlage eines CAN FX-Formats aufgebaut, das in Bezug auf Fig. 2 detaillierter beschrieben ist, und bei welchem die jeweilige Prüfsummeneinheit 15, 35 zum Einsatz kommt. Die Kommunikationssteuereinrichtungen 11, 31 können zudem ausgeführt sein, um je nach Bedarf eine CAN FX-Nachricht 45 oder eine CAN FD-Nachricht 46 für die Sende-/Empfangseinrichtung 32 bereitzustellen oder von dieser zu empfangen. Auch hierbei kommen die jeweiligen Prüfsummeneinheiten 15, 35 zum Einsatz. Die Kommunikationssteuereinrichtungen 11, 31 erstellen und lesen also eine erste Nachricht 45 oder zweite Nachricht 46, wobei sich die erste und zweite Nachricht 45, 46 durch ihren Datenübertragungsstandard unterscheiden, nämlich in diesem Fall CAN FX oder CAN FD.

Die Kommunikationssteuereinrichtung 21 kann wie ein herkömmlicher CAN-Controller nach ISO 11898-1:2015 ausgeführt sein, d.h. wie ein CAN FD toleranter Classical CAN CAN-Controller oder ein CAN FD Controller. Die Kommunikationssteuereinrichtung 21 erstellt und liest zweite Nachrichten 46, beispielsweise CAN FD-Nachrichten 46. Bei den CAN FD-Nachrichten 46 kann eine Anzahl von 0 bis zu 64 Datenbytes umfasst sein, die noch dazu mit einer deutlich schnelleren Datenrate als bei einer Classical CAN-Nachrichtübertragen werden. Insbesondere ist die Kommunikationssteuereinrichtung 21 wie ein herkömmlicher CAN FD-Controller ausgeführt.

Die Sende-/Empfangseinrichtung 22 kann wie ein herkömmlicher CAN Transceiver nach ISO 11898-1:2015 oder CAN FD Transceiver ausgeführt sein. Die Sende-/Empfangseinrichtungen 12, 32 können ausgeführt sein, um je nach Bedarf Nachrichten 45 gemäß dem CAN FX-Format oder Nachrichten 46 gemäß dem derzeitigen CAN FD-Format für die zugehörige Kommunikationssteuereinrichtung 11, 31 bereitzustellen oder von dieser zu empfangen.

Mit den beiden Teilnehmerstationen 10, 30 ist eine Bildung und dann Übertragung von Nachrichten 45 mit dem CAN FX Format sowie der Empfang solcher Nachrichten 45 realisierbar.

Fig. 2 zeigt für die Nachricht 45 einen CAN FX Rahmen 450, wie er von der Kommunikationssteuereinrichtung 11 für die Sende-/Empfangseinrichtung 12 zum Senden auf den Bus 40 bereitgestellt wird. Hierbei erstellt die Kommunikationssteuereinrichtung 11 den Rahmen 450 bei dem vorliegenden Ausführungsbeispiel als kompatibel mit CAN FD, wie auch in Fig. 2 veranschaulicht. Dasselbe gilt analog für die Kommunikationssteuereinrichtung 31 und die Sende-/Empfangseinrichtung 32 der Teilnehmerstation 30.

Gemäß Fig. 2 ist der CAN FX-Rahmen 450 für die CAN-Kommunikation auf dem Bus 40 in unterschiedliche Kommunikationsphasen 451, 452 unterteilt, nämlich eine Arbitrationsphase 451 und eine Datenphase 452. Der Rahmen 450 hat ein Arbitrationsfeld 453, ein Steuerfeld 454, ein Datenfeld 455, ein Prüfsummenfeld 456 für eine Prüfsumme F_CRC, ein Synchronisationsfeld 457 und ein Bestätigungsfeld 458.

In der Arbitrationsphase 451 wird mit Hilfe eines Identifizierers (ID) in dem Arbitrationsfeld 453 bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der anschließenden Datenphase 452 einen exklusiven Zugriff auf den Bus 40 des Bussystems 1 bekommt. In der Arbitrationsphase 451 wird ein Physical Layer wie bei CAN und CAN-FD verwendet. Der Physical Layer entspricht der Bitübertragungsschicht oder Schicht 1 des bekannten OSI-Modells (Open Systems Interconnection Modell).

Ein wichtiger Punkt während der Phase 451 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Zuständen auf dem Bus 40 überschrieben werden können. Im rezessiven Zustand herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer auf derzeit etwa 2 Megabit pro Sekunde im realen Fahrzeug-Einsatz.

In der Datenphase 452 werden neben einem Teil des Steuerfelds 454 die Nutzdaten des CAN-FX-Rahmens bzw. der Nachricht 45 aus dem Datenfeld 455 sowie das Prüfsummenfeld 456 für die Prüfsumme F_CRC gesendet.

Ein Sender der Nachricht 45 beginnt ein Senden von Bits der Datenphase 452 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat.

Ganz allgemein können in dem Bussystem mit CAN FX im Vergleich zu CAN oder CAN FD folgende abweichenden Eigenschaften realisiert werden:
a) Übernahme und ggf. Anpassung bewährter Eigenschaften, die für die Robustheit und Anwenderfreundlichkeit von CAN und CAN FD verantwortlich sind, insbesondere Rahmenstruktur mit Identifier und Arbitrierung nach dem CSMA/CR-Verfahren,
b) Steigerung der Netto-Datenübertragungsrate, insbesondere auf etwa 10 Megabit pro Sekunde,
c) Anheben der Größe der Nutzdaten pro Rahmen, insbesondere auf etwa 4kbyte.

Wie in Fig. 2 dargestellt, verwendet die Teilnehmerstation 10 in der Arbitrationsphase 451 als erster Kommunikationsphase teilweise, insbesondere bis zum FDF-Bit (inklusive), ein von CAN/CAN-FD bekanntes Format gemäß der ISO11898-1:2015. Dagegen verwendet die Teilnehmerstation 10 ab dem FDF-Bit in der ersten Kommunikationsphase sowie in der zweiten Kommunikationsphase, der Datenphase 452, ein CAN FX Format, das nachfolgend beschrieben ist.

Bei dem vorliegenden Ausführungsbeispiel sind CAN FX und CAN FD kompatibel. Hierbei wird das von CAN FD bekannte res-Bit, das nachfolgend FXF-Bit genannt ist, für die Umschaltung von dem CAN FD Format zu dem CAN FX Format genutzt. Daher sind die Rahmen Formate von CAN FD und CAN FX bis zum res-Bit gleich. Eine CAN FX Teilnehmerstation, also hier die Teilnehmerstationen 10, 30, unterstützt auch CAN FD.

Alternativ zu dem in Fig. 2 gezeigten Rahmen 450, bei welchem ein Identifizierer (Identifier) mit 11 Bit verwendet wird, ist optional ein CAN FX Erweitertes Rahmenformat möglich, bei dem ein Identifizierer (Identifier) mit 29 Bit verwendet wird. Dies ist bis zum FDF-Bit identisch zu dem bekannten CAN FD Erweiterten Rahmenformat aus der ISO11898-1:2015.

Gemäß Fig. 2 ist der Rahmen 450 vom SOF-Bit bis einschließlich zum FDF-Bit identisch zum CAN FD Base Frame Format gemäß der ISO11898-1:2015. Daher wird der bekannte Aufbau hier nicht weiter erläutert. Bits, die an ihrer unteren Linie in Fig. 2 mit einem dicken Strich dargestellt sind, werden in dem Rahmen 450 als dominant gesendet. Bits, die an ihrer oberen Linie in Fig. 2 mit einem dicken Strich dargestellt sind, werden in dem Rahmen 450 als rezessiv gesendet.

Allgemein werden bei der Erzeugung des Rahmens 450 zwei unterschiedliche Stuffing-Regeln angewendet. Bis zum FXF-Bit im Steuerfeld 454 gilt die dynamische Bit-Stuffing-Regel von CAN FD, so dass nach 5 gleichen Bits in Folge ein inverses Stuff-Bit einzufügen ist. Nach einem FX-Bit im Steuerfeld 454 gilt eine feste Stuffing-Regel, so dass nach einer festen Zahl von Bits ein fixed Stuff-Bit einzufügen ist. Alternativ können statt nur einem Stuff-Bit eine Anzahl von 2 oder mehr Bits als fixed Stuff-Bits eingefügt werden.

In dem Rahmen 450 folgt direkt nach dem FDF-Bit das FXF-Bit, das von der Position her dem "res Bit" im CAN FD Base Frame Format entspricht, wie zuvor erwähnt. Wird das FXF-Bit als 1, also rezessiv, gesendet, identifiziert es damit den Rahmen 450 als CAN FX-Rahmen. Für einen CAN FD Rahmen setzt die Kommunikationssteuereinrichtung 11 das FXF-Bit als 0, also dominant.

Nach dem FXF-Bit folgt in dem Rahmen 450 ein resFX-Bit, das ein dominantes Bit für die zukünftige Nutzung ist. Das resFX muss für den Rahmen 450 als 0, also dominant, gesendet werden. Empfängt die Teilnehmerstation 10 jedoch ein resFX-Bit als 1, also rezessiv, geht die empfangende Teilnehmerstation 10 beispielsweise in einen Protokollausnahmezustand (Protocoll Exception State), so wie es bei einer CAN FD Nachricht 46 für ein res=1 ausgeführt wird. Das resFX-Bit könnte auch genau umgekehrt definiert sein, also, dass es als 1, also rezessiv, gesendet werden muss, so dass die empfangende Teilnehmerstation bei einem dominanten resFX-Bit in den Protokollausnahmezustand geht.

Nach dem FXF-Bit folgt in dem Rahmen 450 eine Sequenz BRS AD, in welcher eine vorbestimmte Bitsequenz codiert wird. Diese Bitsequenz erlaubt eine einfache und sichere Umschaltung von der Arbitrations-Bitrate der Arbitrationsphase 451 zu der Daten-Bitrate der Datenphase 452. Beispielsweise besteht die Bitsequenz der BRS AD aus einem rezessiven Arbitrations-Bit gefolgt von einem dominanten Daten-Bit. Bei diesem Beispiel kann die Bitrate an der Flanke zwischen den zwei genannten Bits umgeschaltet werden.

Nach der Sequenz BRS AD folgt in dem Rahmen 450 ein DLC-Feld, in welchem der Datenlängencode (DLC = Data Length Code) eingefügt wird, welcher die Anzahl der Bytes im Datenfeld 455 des Rahmens 450 angibt. Der Datenlängencode (DLC) kann jeden Wert von 1 bis zur maximalen Länge des Datenfelds 455 bzw. Datenfeldlänge annehmen. Beträgt die maximale Datenfeldlänge insbesondere 2048 Bit, benötigt der Datenlängencode (DLC) eine Anzahl von 11 Bits unter den Annahmen, dass DLC = 0 eine Datenfeldlänge mit einer Anzahl von 1 Byte bedeutet und DLC = 2047 eine Datenfeldlänge mit einer Anzahl von 2048 Byte Datenfeldlänge bedeutet. Alternativ könnte ein Datenfeld 455 der Länge 0 erlaubt sein, wie beispielsweise bei CAN. Hierbei würde DLC = 0 beispielsweise die Datenfeldlänge mit der Anzahl von 0 Bytes codieren. Die maximale codierbare Datenfeldlänge ist mit beispielsweise 11 Bit dann (2^11)-1 = 2047.

Nach dem DLC-Feld folgt in dem Rahmen 450 eine Kopfprüfsumme H_CRC. Die Kopfprüfsumme ist eine Prüfsumme zur Absicherung des Kopfes (Headers) des Rahmens 450, das heißt aller Bits vom Beginn des Rahmens 450 mit dem SOF-Bit bis zum Beginn der Kopfprüfsumme H_CRC, inklusive aller dynamischen und optional der fixed Stuff-Bits bis zum Beginn der Kopfprüfsumme H_CRC. Die Länge der Kopfprüfsumme H_CRC und damit des Prüfsummen-Polynoms gemäß der zyklischen Redundanzprüfung (CRC) ist entsprechend der gewünschten Hamming-Distanz zu wählen. Das von der Kopfprüfsumme H_CRC abzusichernde Datenwort ist bei einem Datenlängencode (DLC) von 11 Bit länger als 27 Bit. Daher muss das Polynom der Kopfprüfsumme H_CRC, um eine Hamming-Distanz von 6 zu erreichen, mindestens 13 Bit lang sein. Die Berechnung der Kopfprüfsumme H_CRC wird nachfolgend noch genauer beschrieben.

Nach der Kopfprüfsumme H_CRC folgt in dem Rahmen 450 das Datenfeld 455 (Data Field). Das Datenfeld 455 besteht aus 1 bis n Daten-Bytes, wobei n beispielsweise 2048 Byte oder 4096 Byte oder ein beliebiger anderer Wert ist. Alternativ ist eine Datenfeldlänge von 0 denkbar. Die Länge des Datenfelds 455 ist in dem DLC-Feld codiert, wie zuvor beschrieben.

Nach dem Datenfeld 455 folgt in dem Rahmen 450 eine Rahmenprüfsumme F_CRC. Die Rahmenprüfsumme F_CRC besteht aus den Bits der Rahmenprüfsumme F_CRC. Die Länge der Rahmenprüfsumme F_CRC und damit des CRC Polynoms ist entsprechend der gewünschten Hamming-Distanz zu wählen. Die Rahmenprüfsumme F_CRC sichert den gesamten Rahmen 450 ab. Alternativ ist optional nur das Datenfeld 455 mit der Rahmenprüfsumme F_CRC abgesichert. Die Berechnung der Rahmenprüfsumme F_CRC wird nachfolgend noch genauer beschrieben.

Nach der Rahmenprüfsumme F_CRC folgt in dem Rahmen 450 eine Sequenz BRS DA, in welcher eine vorbestimmte Bitsequenz codiert wird. Diese Bitsequenz erlaubt eine einfache und sichere Umschaltung von der Daten-Bitrate der Datenphase 452 zu der Arbitrations-Bitrate der Arbitrationsphase 451. Beispielsweise besteht die Bitsequenz der BRS DA aus einem rezessiven Daten-Bit, gefolgt von einem dominanten Arbitrations-Bit. Bei diesem Beispiel kann an der Flanke zwischen den zwei genannten Bits die Bitrate umgeschaltet werden.

Nach der Sequenz BRS DA folgt in dem Rahmen 450 ein Sync-Feld, in dem ein Synchronisationsmuster (Sync Pattern) vorgehalten ist. Das Synchronisationsmuster ist ein Bitmuster, das einer empfangenden Teilnehmerstation 10, 30 erlaubt, den Beginn der Arbitrationsphase 451 nach der Datenphase 452 zu erkennen. Das Synchronisationsmuster erlaubt empfangenden Teilnehmerstation 10, 30, die beispielsweise aufgrund einer falschen Kopfprüfsumme H_CRC die korrekte Länge des Datenfelds 455 nicht kennen, sich aufzusynchronisieren. Anschließend können diese Teilnehmerstationen ein "Negativ Acknowledge" senden, um den fehlerhaften Empfang mitzuteilen. Dies ist insbesondere dann sehr wichtig, wenn CAN FX im Datenfeld 455 keine Fehlerrahmen 47 (Error Flags) mehr erlaubt.

Nach dem Sync-Feld folgt in dem Rahmen 450 ein Bestätigungsfeld (ACK Field), das aus mehreren Bits besteht, nämlich bei dem Beispiel von Fig. 2 einem ACK-Bit, einem ACK-dlm-Bit, einem NACK-Bit und einem NACK-dlm-Bit Bit. Das NACK-Bit und das NACK-dlm-Bit sind optionale Bits. Das ACK-Bit senden die empfangenden Teilnehmerstation 10, 30 als dominant, wenn sie den Rahmen 450 korrekt empfangen haben. Die sendende Teilnehmerstation sendet das ACK-Bit als rezessiv. Daher kann das ursprünglich in dem Rahmen 450 auf den Bus 40 gesendete Bit von den empfangenden Teilnehmerstationen 10, 30 überschrieben werden. Das ACK-dlm-Bit wird als ein rezessives Bit gesendet, welches zur Abtrennung zu anderen Feldern dient. Das NACK-Bit und das NACK-dlm Bit dienen dazu, dass eine empfangende Teilnehmerstation einen nicht korrekten Empfang des Rahmens 450 auf dem Bus 40 signalisieren kann. Die Funktion der Bits ist wie die des ACK-Bits und des ACK-dlm-Bits.

Nach dem Bestätigungsfeld (ACK Field) folgt in dem Rahmen 450 ein Endefeld (EOF = End of Frame). Die Bitsequenz des Endefelds (EOF) dient dazu, das Ende des Rahmens 450 zu kennzeichnen. Das Endefeld (EOF) sorgt dafür, dass am Ende des Rahmens 450 eine Anzahl von 8 rezessiven Bits gesendet wird. Das ist eine Bitfolge, die innerhalb des Rahmens 450 nicht auftreten kann. Dadurch kann von den Teilnehmerstationen 10, 20, 30 das Ende des Rahmens 450 sicher erkannt werden.

Das Endefeld (EOF) hat eine Länge, die abhängig davon unterschiedlich ist, ob im NACK-Bit ein dominantes Bit oder ein rezessives Bit gesehen wurde. Wenn die sendende Teilnehmerstation das NACK-Bit als dominant empfangen hat, dann hat das Endefeld (EOF) eine Anzahl von 7 rezessiven Bits. Ansonsten ist das Endefeld (EOF) nur 5 rezessive Bits lang.

Nach dem Endefeld (EOF) folgt in dem Rahmen 450 ein Zwischenrahmenabstand (IFS - Inter Frame Space). Dieser Zwischenrahmenabstand (IFS) ist ausgestaltet wie bei CAN FD entsprechend der ISO11898-1:2015.

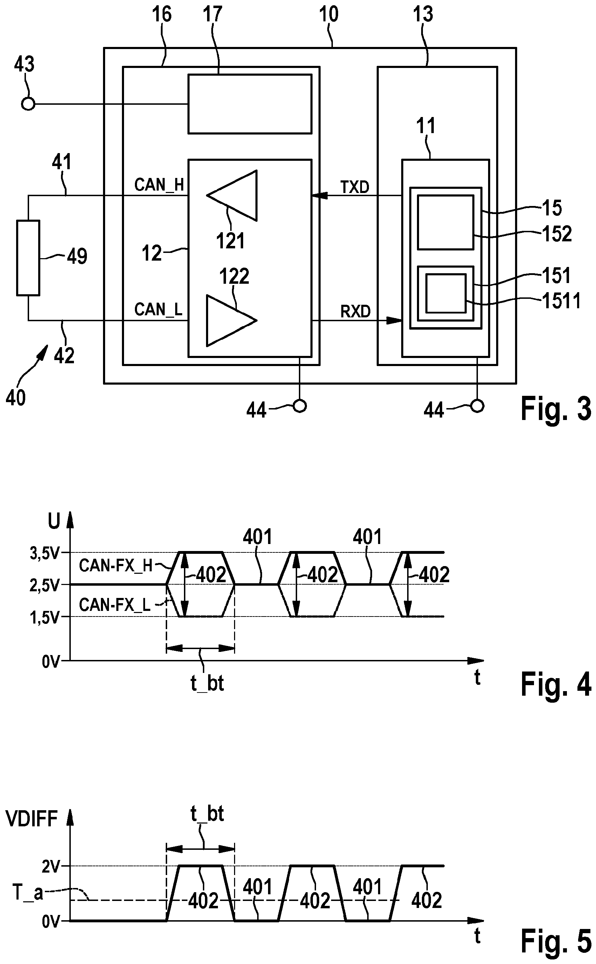

Fig. 3 zeigt den grundlegenden Aufbau der Teilnehmerstation 10 mit der Kommunikationssteuereinrichtung 11, der Sende-/Empfangseinrichtung 12 und der Prüfsummeneinheit 15, die Teil der Kommunikationssteuereinrichtung 11 ist. Die Teilnehmerstation 30 ist in ähnlicher Weise aufgebaut, wie in Fig. 3 gezeigt, jedoch ist die Prüfsummeneinheit 35 gemäß Fig. 1 separat von der Kommunikationssteuereinrichtung 31 und der Sende-/Empfangseinrichtung 32 angeordnet. Daher wird die Teilnehmerstation 30 nicht separat beschrieben.

Gemäß Fig. 3 hat die Teilnehmerstation 10 zusätzlich zu der Kommunikationssteuereinrichtung 11 und der Sende-/Empfangseinrichtung 12 einen Mikrocontroller 13, welchem die Kommunikationssteuereinrichtung 11 zugeordnet ist, und eine System-ASIC 16 (ASIC = Anwendungsspezifische Integrierte Schaltung), die alternativ ein System Basis-Chip (SBC) sein kann, auf dem mehrere für eine Elektronik-Baugruppe der Teilnehmerstation 10 notwendige Funktionen zusammengefasst sind. In dem System-ASIC 16 ist zusätzlich zu der Sende-/Empfangseinrichtung 12 eine Energieversorgungseinrichtung 17 eingebaut, welche die Sende-/Empfangseinrichtung 12 mit elektrischer Energie versorgt. Die Energieversorgungseinrichtung 17 liefert üblicherweise eine Spannung CAN_Supply von 5 V. Je nach Bedarf kann die Energieversorgungseinrichtung 17 jedoch eine andere Spannung mit einem anderen Wert liefern. Zusätzlich oder alternativ kann die Energieversorgungseinrichtung 17 als Stromquelle ausgestaltet sein.

Die Prüfsummeneinheit 15 hat einen Kopfprüfsummenblock 151 und einen Rahmenprüfsummenblock 152, die nachfolgend noch genauer beschrieben sind. In dem Kopfprüfsummenblock 151 ist ein Startwert 1511 zumindest zeitweise gespeichert.

Die Sende-/Empfangseinrichtung 12 hat zudem einen Sender 121 und einen Empfänger 122. Auch wenn nachfolgend immer von der Sende-/Empfangseinrichtung 12 gesprochen ist, ist es alternativ möglich, den Empfänger 122 in einer separaten Einrichtung extern von dem Sender 121 vorzusehen. Der Sender 121 und der Empfänger 122 können wie bei einer herkömmlichen Sende-/Empfangseinrichtung 22 aufgebaut sein. Der Sender 121 kann insbesondere mindestens einen Operationsverstärker und/oder einen Transistor aufweisen. Der Empfänger 122 kann insbesondere mindestens einen Operationsverstärker und/oder einen Transistor aufweisen.

Die Sende-/Empfangseinrichtung 12 ist an den Bus 40 angeschlossen, genauer gesagt dessen erste Busader 41 für CAN_H oder CAN-FX_H und dessen zweite Busader 42 für CAN_L oder CAN-FX_L. Über mindestens einen Anschluss 43 erfolgt die Spannungsversorgung für die Energieversorgungseinrichtung 17 zum Versorgen der ersten und zweiten Busader 41, 42 mit elektrischer Energie, insbesondere mit der Spannung CAN-Supply. Die Verbindung mit Masse bzw. CAN_GND ist über einen Anschluss 44 realisiert. Die erste und zweite Busader 41, 42 sind mit einem Abschlusswiderstand 49 terminiert.

Die erste und zweite Busader 41, 42 sind in der Sende-/Empfangseinrichtung 12 nicht nur mit dem Sender 121, der auch als Transmitter bezeichnet wird, und mit dem Empfänger 122 verbunden, der auch als Receiver bezeichnet wird, auch wenn die Verbindung in Fig. 3 zur Vereinfachung nicht gezeigt ist.

Im Betrieb des Bussystems 1 setzt der Sender 121 ein Sendesignal TXD oder TxD der Kommunikationssteuereinrichtung 11 in entsprechende Signale CAN-FX_H und CAN-FX_L für die Busadern 41, 42 um und sendet diese Signale CAN-FX_H und CAN-FX_L an den Anschlüssen für CAN_H und CAN_L auf den Bus 40.

Der Empfänger 122 bildet aus von Bus 40 empfangenen Signalen CAN-FX_H und CAN-FX_L gemäß Fig. 4 ein Empfangssignal RXD oder RxD und gibt dieses an die Kommunikationssteuereinrichtung 11 weiter, wie in Fig. 3 gezeigt. Mit Ausnahme eines Leerlauf- oder Bereitschaftszustands (Idle oder Standby), hört die Sende-/Empfangseinrichtung 12 mit dem Empfänger 122 im Normalbetrieb immer auf eine Übertragung von Daten bzw. Nachrichten 45, 46 auf dem Bus 40 und zwar unabhängig davon, ob die Sende-/Empfangseinrichtung 12 Sender der Nachricht 45 ist oder nicht.

Gemäß dem Beispiel von Fig. 4 haben die Signale CAN-FX_H und CAN-FX_L zumindest in der Arbitrationsphase 451 die dominanten und rezessiven Buspegel 401, 402, wie von CAN bekannt. Auf dem Bus 40 bildet sich ein Differenzsignal VDIFF = CAN-FX_H - CAN-FX_L aus, das in Fig. 5 gezeigt ist. Die einzelnen Bits des Signals VDIFF mit der Bitzeit t_bt können mit einer Empfangsschelle von 0,7 V erkannt werden. In der Datenphase 452 werden die Bits der Signale CAN-FX_H und CAN-FX_L schneller, also mit einer kürzeren Bitzeit t_bt, gesendet als in der Arbitrationsphase 451. Somit unterscheiden sich die Signale CAN-FX_H und CAN-FX_L in der Datenphase 452 zumindest in deren schnelleren Bitrate von den herkömmlichen Signalen CAN_H und CAN_L.

Die Abfolge der Zustände 401, 402 für die Signale CAN-FX_H, CAN-FX_L in Fig. 4 und der daraus resultierende Verlauf der Spannung VDIFF von Fig. 5 dient nur der Veranschaulichung der Funktion der Teilnehmerstation 10. Die Abfolge der Datenzustände für die Buszustände 401, 402 ist je nach Bedarf wählbar.

Mit anderen Worten erzeugt der Sender 121 in einer ersten Betriebsart gemäß Fig. 4 einen ersten Datenzustand als Buszustand 402 mit unterschiedlichen Buspegeln für zwei Busadern 41, 42 der Busleitung und einen zweiten Datenzustand als Buszustand 401 mit demselben Buspegel für die zwei Busadern 41, 42 der Busleitung des Busses 40.

Außerdem sendet der Sender 121, für die zeitlichen Verläufe der Signale CAN-FX_H, CAN-FX_L in einer zweiten Betriebsart, welche die Datenphase 452 umfasst, die Bits mit einer höheren Bitrate auf den Bus 40. Die CAN-FX_H und CAN-FX_L Signale können in der Datenphase 452 zudem mit einem anderen Physical Layer als bei CAN FD erzeugt werden. Dadurch kann die Bitrate in der Datenphase 452 noch weiter erhöht werden als bei CAN FD.

Die Prüfsummeneinheit 15 von Fig. 3, insbesondere deren Kopfprüfsummenblock 151, dient zum Berechnen und Auswerten der Prüfsumme in dem Feld für die Kopfprüfsumme H_CRC. Außerdem dient die Prüfsummeneinheit 15, insbesondere deren Rahmenprüfsummenblock 152, zum Berechnen und Auswerten der Prüfsumme in dem Feld für die Rahmenprüfsumme F_CRC.

Wie zuvor erwähnt, wird eine Prüfsumme zur Absicherung des Kopfes (Headers) des Rahmens 450 gebildet, das heißt aller Bits vom Beginn des Rahmens 450 mit dem SOF-Bit bis zum Beginn der Kopfprüfsumme H_CRC, inklusive aller dynamischen und optional der fixed Stuff-Bits bis zum Beginn der Kopfprüfsumme H_CRC.

Bei dem vorliegenden Ausführungsbeispiel trifft die Kommunikationssteuereinrichtung 11, insbesondere deren Prüfsummeneinheit 15 bzw. Kopfprüfsummenblock 151, bei der Berechnung der Kopfprüfsumme H_CRC Vorkehrungen um einen als Typ B bezeichneten Fehler zu eliminieren. Ein solcher Fehler kann aufgrund der dynamischen Stuff-Bits vorkommen, die bis zum FXF-Bit des Rahmens 450 auftreten können. Der Fehler tritt auf, wenn durch Glitches hervorgerufene Fehlersynchronisationen fälschlicherweise Stuff-Bits eingefügt oder entfernt werden, während das aktuelle Zwischenergebnis der Prüfsumme CRC den Wert 0 hat.

Die Kommunikationssteuereinrichtung 11, insbesondere deren Prüfsummeneinheit 15 bzw. Kopfprüfsummenblock 151, wählt daher den Startwert für die Berechnung der Kopfprüfsumme H_CRC derart, dass nicht alle Bits des CRC-Generator-Registers auf '0' stehen können, während eine Bitsequenz ohne erkannte Stuff-Fehler bis zum FXF-Bit verarbeitet wird. Somit kann der temporäre Wert der Berechnung der Kopfprüfsumme H_CRC bis zur Verarbeitung des FXF-Bits nicht 0...0 werden. Der Startwert ist also auf einen speziellen Wert zu setzen, aber nicht auf 0...0, damit bis zu dem FDF-Bit kein Wert 0 ... 0 in der Kopfprüfsumme H_CRC auftritt.

Bei der Bestimmung des Startwerts für die Berechnung der Kopfprüfsumme H_CRC berücksichtigt die Kommunikationssteuereinrichtung 11, insbesondere deren Prüfsummeneinheit 15 bzw. Kopfprüfsummenblock 151, dass eine CAN FX Teilnehmerstation 10, 30 bis zum FXF-Bit nicht jede beliebige Bitfolge senden kann. Die Kommunikationssteuereinrichtung 11, insbesondere deren Prüfsummeneinheit 15 bzw. Kopfprüfsummenblock 151, bestimmt daher den Startwert unter den folgenden Randbedingungen, nämlich
- dass durch die dynamischen Stuff-Bits nicht mehr als fünf dominante oder fünf rezessive Bits in Folge gesendet werden können, und
- dass bestimmte Bits des Rahmens 450 einen festen Wert haben, wie zuvor beschrieben und damit nicht variabel sind.

Somit kann der vorbestimmte Startwert von der Kommunikationssteuereinrichtung 11, insbesondere mittels Software in der Prüfsummeneinheit 15 bzw. Kopfprüfsummenblock 151, dynamisch konfiguriert werden.

Alternativ kann der vorbestimmte Startwert in der Kommunikationssteuereinrichtung 11 fest gespeichert sein, nachdem der Startwert einmal, entweder von der Kommunikationssteuereinrichtung 11 oder einer sonstigen Vorrichtung bestimmt wurde. Alternativ kann der vorbestimmte Startwert von einem Bediener unter der Maßgabe gewählt werden, dass der Startwert ungleich 0...0 ist.

Damit kann bei der Teilnehmerstation 10 ein Typ B Fehler nicht mehr auftreten.

Der große Vorteil der beschriebenen Vorgehensweise zur Berechnung des Startwerts ist, dass in den Rahmen 450 keine zusätzlichen Bits eingeführt werden. Dadurch wird der Datenüberhang des Rahmens 450 und die Komplexität der Auswertung des Rahmens 450 reduziert.

Zusätzlich könnte es notwendig sein, die Länge der Kopfprüfsumme H_CRC und damit die Ordnung des CRC Polynoms zu erhöhen, um einen passenden H_CRC-Startwert finden zu können. Somit wäre die Kopfprüfsumme H_CRC länger, als für die Erkennung von einer bestimmten Anzahl normaler Bit-Flips notwendig wäre, bei welchen sich der Bitzustand aufgrund eines Fehlers unbeabsichtigt ändert.

Zudem könnte die Kommunikationssteuereinrichtung 11, insbesondere deren Prüfsummeneinheit 15 bzw. Kopfprüfsummenblock 151, bei Rahmen 450, welche einen Identifizierer (ID) mit 11 Bits verwenden, ein anderes Polynom für die Kopfprüfsumme H_CRC verwenden als bei Rahmen 450, welche einen Identifizierer (ID) mit 29 Bits verwenden. Dies hat den Vorteil, dass der Datenüberhand (Overhead) durch die Kopfprüfsumme H_CRC bei Rahmen 450, welche einen Identifizierer (ID) mit 11 Bits verwenden, kleiner ist als bei Rahmen 450, welche einen Identifizierer (ID) mit 29 Bits verwenden.

Die Prüfsummeneinheit 15, insbesondere deren Rahmenprüfsummenblock 152 bildet außerdem die Rahmenprüfsumme F_CRC, wie zuvor erwähnt. Hierbei kann die Prüfsummeneinheit 15 eine der genannten Möglichkeiten anwenden. Hierbei sichert die Rahmenprüfsumme F_CRC gemäß den nachfolgenden Möglichkeiten 1 und 2 jeweils den gesamten Rahmen 450 bis zur Rahmenprüfsumme F_CRC ab.

Möglichkeit 1: Die Rahmenprüfsumme F_CRC wird über den gesamten Rahmen 450 berechnet. Somit gehen in die Berechnung der Rahmenprüfsumme F_CRC alle Bits ab und inklusive dem SOF Bit bis zum Beginn der Rahmenprüfsumme F_CRC ein. Zusätzlich werden auch die dynamischen Stuff-Bits und optional auch die fixed Stuff-Bits in die Berechnung mit einbezogen. Da die Kopfprüfsumme H_CRC bereits den Kopf (Header) des Rahmens 450 gegen die Type B Fehler absichert, muss das die Rahmenprüfsumme F_CRC nicht nochmals tun.

Möglichkeit 2: Die Rahmenprüfsumme F_CRC wird über die Kopfprüfsumme H_CRC und das Datenfeld 455 berechnet. Somit gehen in die Berechnung der Rahmenprüfsumme F_CRC alle Bits ab und inklusive dem ersten Bit der Kopfprüfsumme H_CRC ein. Optional werden auch die fixed Stuff-Bits in die Berechnung mit einbezogen. Da die Kopfprüfsumme H_CRC bereits den Kopf (Header) des Rahmens 450 absichert, reicht es aus, die Kopfprüfsumme H_CRC in die F_CRC Berechnung einzubeziehen, um den gesamten Rahmen 450 abzusichern.

Möglichkeit 3: Die Rahmenprüfsumme F_CRC sichert nur das Datenfeld 455 ab. Somit gehen in die Berechnung der Rahmenprüfsumme F_CRC alle Bits ab dem ersten Bit nach der Kopfprüfsumme H_CRC bis zum Beginn der Rahmenprüfsumme F_CRC ein. Optional werden auch die fixed Stuff-Bits in die Berechnung mit einbezogen. Somit sichert die Rahmenprüfsumme F_CRC nur das Datenfeld 455 ab. Dies ist ausreichend, weil die Kopfprüfsumme H_CRC bereits den Kopf (Header) des Rahmens 450 absichert. Zusammen sichern die Rahmenprüfsumme F_CRC und die Kopfprüfsumme H_CRC den kompletten Rahmen 450 ab.

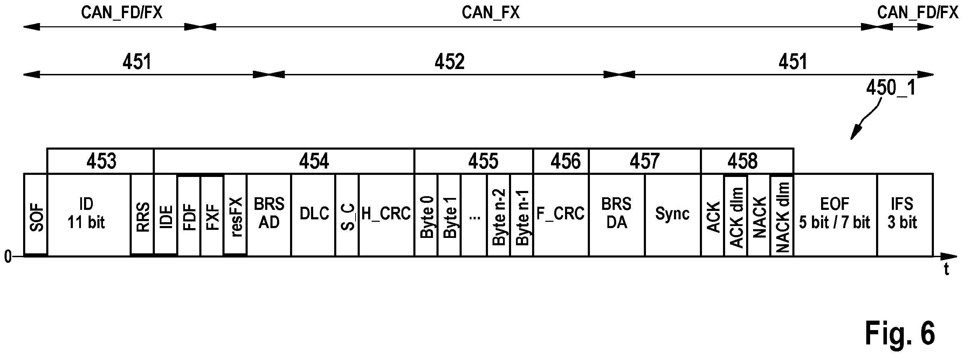

Fig. 6 zeigt einen Rahmen 450_1 gemäß einem zweiten Ausführungsbeispiel, bei welchem CAN FX und CAN FD kompatibel sind. Bei diesem Ausführungsbeispiel unterscheidet sich der Rahmen 450_1 und damit das CAN FX Rahmenformat von dem Rahmen 450 von Fig. 2, wie nachfolgend beschrieben. Hierbei sind nur die Unterschiede zu dem Rahmen 450 von Fig. 6 beschrieben. Im Übrigen sind die Rahmen 450, 450_1 der beiden Ausführungsbeispiele gleich.

In dem Rahmen 450_1 ist vor der Kopfprüfsumme H_CRC ein S_C-Feld eingefügt. In dem S_C-Feld wird die Anzahl der gesendeten dynamischer Stuff-Bits (Stuff-Count) übertragen. Das S_C-Feld kann 1 bis n Bits aufweisen. In diesem Fall, also für Rahmen 450_1, kommen maximal 3 dynamische Stuff-Bits vor, d.h. n kann als 2 gewählt werden. Alternativ ist die Übertragung von "Anzahl dynamischer Stuff-Bits modulo X" möglich, um die Zahl der zu übertragenden Bits zu reduzieren. X kann zum Beispiel 2 sein.

Durch diese Variante wird jedoch der Datenüberhang des Rahmens 450_1 im Vergleich zu dem Rahmen 450 von Fig. 2 größer.

Bei einer Modifikation des Rahmens 450_1 wird in dem S_C-Feld anstelle der Anzahl der gesendeten dynamischen Stuff-Bits (Stuff-Count) ein Stuff-Kompensator einfügt. Der Stuff-Kompensator hat 0 bis m Bits, wobei m der maximalen Zahl von dynamischen Stuff-Bits entspricht, die bis zum FDF-Bit vorkommen können. Dabei ist die Summe aus dynamischen Stuff-Bits und Stuff-Kompensatorbits immer gleich m.

Der Stuff-Kompensator sorgt dafür, dass die Länge des Rahmenkopfes des Rahmens 450_1 konstant wird. Beispielsweise können im Fall von 11 Bit für den Identifizierer (ID) maximal drei dynamische Stuff-Bits auftreten. Somit wäre bei einem Identifizierer (ID) mit 11 Bits m = 3. In einem Rahmen 450_1 mit einem dynamischen Stuff-Bit ist der Stuff-Kompensator 2 Bits lang, da gilt 3 - 1 = 2 Bits. Dadurch beginnt das Datenfeld 455 immer nach einer festen Zahl von Bits ab dem Anfang des Rahmens.

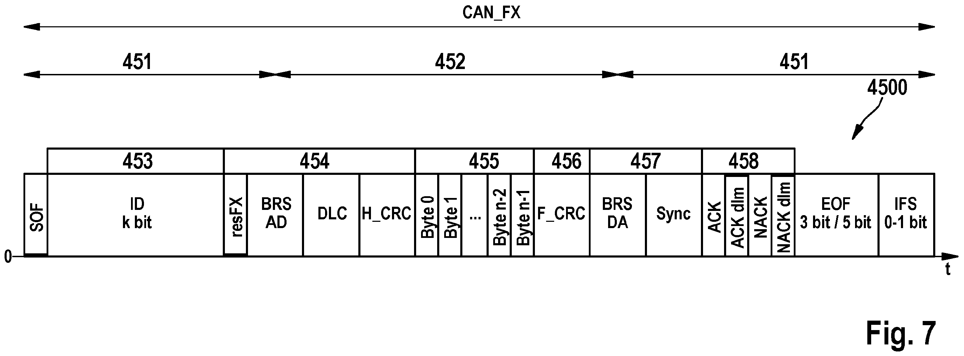

Fig. 7 zeigt einen Rahmen 4500 gemäß einem dritten Ausführungsbeispiel, bei welchem CAN FX und CAN FD nicht kompatibel sind. Bei diesem Ausführungsbeispiel unterscheidet sich der Rahmen 4500 und damit das CAN FX Rahmenformat von dem Rahmen 450 von Fig. 2, wie nachfolgend beschrieben. Hierbei sind nur die Unterschiede zu dem Rahmen 450 von Fig. 2 beschrieben. Im Übrigen sind die Rahmen 450, 4500 der beiden Ausführungsbeispiele gleich.

Allgemein wird bei der Erzeugung des Rahmens 4500 gemäß dem vorliegenden Ausführungsbeispiel nur die feste Stuffing-Regel verwendet, so dass nach einer festen Zahl von Bits ein fixed Stuff-Bit einzufügen ist. Alternativ können statt nur einem Stuff-Bit auch 2 oder mehr Bits als fixed Stuff-Bits eingefügt werden. Dies führt bei bekanntem Wert des Datenlängecodes (DLC) zu einer konstanten Rahmenlänge bzw. einer konstanten Länge des Rahmens 4500. Dies verhindert verschiedene Probleme, die durch dynamische Stuff-Bits hervorgerufen werden.

In dem Rahmen 4500 gemäß dem vorliegenden Ausführungsbeispiel ist der Identifizierer (ID) nicht mehr auf eine Anzahl von 11 Bits oder 29 Bits wie bei CAN FD beschränkt. Die Anzahl k der Bits des Identifizierers (ID) kann frei gewählt werden. Die Anzahl k ist jedoch alternativ auf einen festen Wert festlegbar. Für eine hohe Nettodatenrate ist eine ID mit k = 8 Bits sinnvoll. Diese reicht aus, um jeder Teilnehmerstation 10, 20, 30 des Bussystems 1 ausreichend viele Bus-Zugriffs-Prioritäten zu geben. Selbstverständlich ist jedoch ein anderer Wer für k wählbar, je nach Bedarf und Anzahl von verschiedenen Prioritäten in dem Bussystem 1.

Die Bits RRS, IDE, FDF, FXF des Rahmens 450 von Fig. 2 sind bei dem Rahmen 4500 nicht mehr notwendig und werden wegelassen. Dies spart 4 Bits ein, so dass der Rahmenüberhang reduziert wird. Dadurch wird die Nettodatenrate im Bussystem 1 erhöht.

Das Endefeld (EOF) hat in dem Rahmen 4500 nur noch eine Anzahl von 5 Bits, wenn das NACK-Bit dominant ist. Ist das NACK-Bit dagegen rezessiv, hat das Endefeld (EOF) eine Anzahl von 3 Bits. Dies sorgt dafür, dass am Ende des Rahmens 4500 eine Anzahl von 6 rezessiven Bits gesendet wird. Diese Zahl von rezessiven Bits kann in einem gültigen Rahmen 4500 an keiner anderen Stelle vorkommen, wenn in der Arbitrationsphase 451 nach 5 gleichen Bits ein fixed Stuff-Bit eingefügt wird. Es könnten alternativ mehr als 6 Bits sein. Insbesondere muss die Zahl der EOF Bits an die Zahl der Bits, nach denen ein fixed Stuff-Bit eingefügt wird, angepasst werden.

Der Zwischenrahmenabstand (IFS) benötigt in dem Rahmen 4500 keine Mindestlänge. Insbesondere kann der Zwischenrahmenabstand (IFS) die Länge 0 haben. In einem solchen Fall werden zwei Rahmen 4500 nahtlos nacheinander gesendet. Jedoch ist ein Zwischenrahmenabstand (IFS) mit einer Anzahl von beispielsweise 1 Bit auch sinnvoll, um die Robustheit des Bussystems 1 im Vergleich zu dem zuvor genannten Fall zu erhöhen. Durch die nun 7 rezessiven Bits zwischen zwei Rahmen 4500 kann sich eine neue Teilnehmerstation am Bus 40 zuverlässiger synchronisieren.

Bei dem Rahmen 4500 treten somit keine dynamischen Stuff-Bits auf. In Folge dessen muss kein Schutz gegen den zuvor beschriebenen Fehlertyp B vorgesehen sein. Daher wird das Feld S_C aus Fig. 6, dass zur Erkennung von Fehlertyp B dient, nicht benötigt, so dass der Rahmenüberhang noch weiter reduziert wird. Optional kann auch die Kopfprüfsumme H_CRC entfallen, so dass der Rahmenüberhang noch weiter reduziert wird. Dies erhöht die Nettodatenrate im Bussystem 1 noch mehr.

Bei dem Rahmen 4500 kann somit die Rahmenprüfsumme F_CRC gemäß einer der Möglichkeiten 1 bis 3 errechnet werden, wie in Bezug auf das erste Ausführungsbeispiel beschrieben, bei welchem die CAN FD Kompatibilität vorliegt.

Alle zuvor beschriebenen Ausgestaltungen der Teilnehmerstationen 10, 20, 30, des Bussystems 1 und des darin ausgeführten Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Auch wenn die Erfindung zuvor am Beispiel des CAN-Bussystems beschrieben ist, kann die Erfindung bei jedem Kommunikationsnetzwerk und/oder Kommunikationsverfahren eingesetzt werden, bei welchem zwei verschiedene Kommunikationsphasen verwendet werden, in denen sich die Buszustände unterscheiden, die für die unterschiedlichen Kommunikationsphasen erzeugt werden. Insbesondere ist die Erfindung bei Entwicklungen von sonstigen seriellen Kommunikationsnetzwerken, wie Ethernet und/oder 100 Base-T1 Ethernet, Feldbussystemen, usw. einsetzbar.

Insbesondere kann das Bussystem 1 gemäß den Ausführungsbeispielen ein Kommunikationsnetzwerk sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 20 in dem Bussystem 1 entfallen. Es ist möglich, dass eine oder mehrere der Teilnehmerstationen 10 oder 30 in dem Bussystem 1 vorhanden sind. Denkbar ist, dass alle Teilnehmerstationen in dem Bussystem 1 gleich ausgestaltet sind, also nur Teilnehmerstation 10 oder nur Teilnehmerstation 30 vorhanden sind.

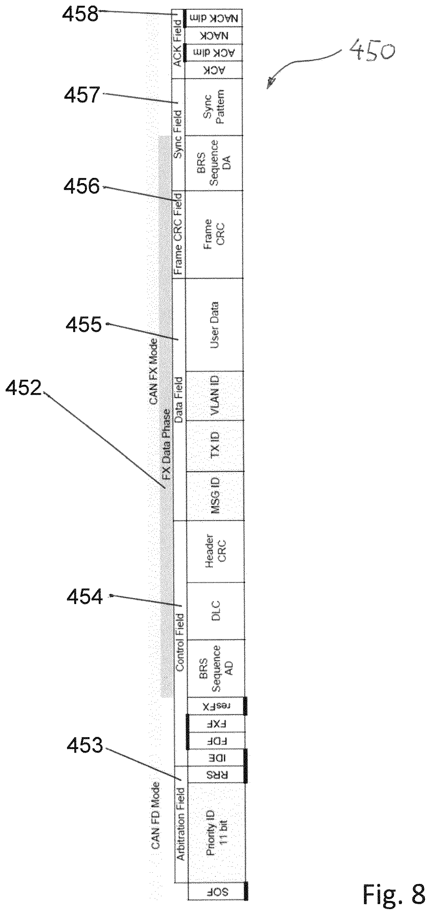

Die vorstehend beschriebene Erfindung kann hinsichtlich der Einführung unterschiedlicher Identifier wie folgt und wie in Fig. 8 dargestellt noch weiterentwickelt werden.

Die Begriffe Nachricht und Rahmen werden bei der Beschreibung gleichbedeutend verwendet.

In Fig. 8 ist die Weiterentwicklung durch unterschiedliche Identifier ausgehend vom Rahmenformat aus Fig. 2 dargestellt. Die Weiterentwicklung durch unterschiedliche Identifier kann entsprechend völlig analog auch auf die Rahmenformate, die in Fig. 6 oder Fig. 7 dargestellt sind, angewendet werden.

Es werden mehrere Identifier im CAN FX Rahmen eingeführt:

### Priority ID:

Die Priority ID ersetzt den oder entspricht dem bereits beschriebenen Identifizierer ID in dem Arbitrationsfeld 453 der Nachrichten oder Rahmen 450, 450_1 oder 4500. Die Priority ID wird vorrangig für die Priorität des Bus-Zugriffs im Zuge der Arbitrierung verwendet.

### MSG ID:

Die Nachrichtenkennung MSG ID, welche im Datenfeld 455 übertragen werden kann, identifiziert den Inhalt der Nachricht oder des Rahmens. Die Nachrichtenkennung MSG ID ist optional.

### TX ID:

Die Senderkennung TX ID, welche im Datenfeld 455 übertragen werden kann, identifiziert den Sender der Nachricht oder des Rahmens. Die Senderkennung TX ID ist optional.

### VLAN ID:

Die Virtualnetzwerkkennung VLAN ID, welche im Datenfeld 455 übertragen werden kann, enthält Weiterleitungsinformation für die Nachricht oder den Rahmen. Die Virtualnetzwerkkennung VLAN ID ist optional.

### Vorteile:

Die angegebene Einführung mehrerer Kennungen hat gegenüber dem herkömmlichen Identifizierer bei CAN FD folgende Vorteile:
Jede der aufgeführten Kennungen weist die optimale Länge auf, um die erforderliche Kennzeichnung oder Funktion optimal zu erfüllen. Gleichzeitig wird eine hohe Netto-Datenrate erzielt, zum einen, weil nur diejenigen Bits in der langsamen Arbitrationsphase übertragen werden, die für die Arbitrierung unbedingt nötig sind, und zum anderen, weil nur diejenigen der optionalen Kennungs-Typen (MSG ID, TX ID, VLAN ID) verwendet werden können, die für die jeweilige Anwendung benötigt werden.

Die Reihenfolge der optionalen Kennungen MSG ID, TX ID, und VLAN ID innerhalb des Datenfeldes kann auch abweichend von der oben angegebenen und in Fig. 8 veranschaulichten Reihenfolge gewählt werden.

Beschreibung der für diesen Aspekt der Erfindung relevanten Teile des Rahmens in Fig. 8:
- Priority ID
   ∘ Diese ID entspricht der Frame ID bei CAN FD.
   ∘ Sie wird bei CAN FX Priority ID genannt, weil sie hauptsächlich die Bus-Zugriffspriorität angibt. Je höher die Priorität desto eher gewinnt ein Rahmen die Arbitration am Bus.
   ∘ In dem in Fig. 8 dargestellten Beispiel ist der CAN FX Rahmen kompatibel zum CAN FD Rahmen. Dies schränkt die Länge der Priority ID auf 11 oder 29 Bits ein. Bei einem CAN FX Rahmen, der nicht kompatibel zu CAN FD ist, könnte die Priority ID eine beliebige Länge haben, z.B. 5 Bit, um einen besonderes geringen Overhead zu erzeugen. Dies wurde bereits im Zusammenhang mit den Ausführungsbeispielen aus Fig. 2 und Fig. 7 erläutert.
- DLC: Data Length Code
   ∘ Das ist der Datenlängencode DLC, welcher die Anzahl der Bytes im Data Field (entsprechend dem Datenfeld 455 der Abbildungen Fig. 2, Fig. 6 und Fig. 7) angibt.
   ∘ Es gibt nun zwei Alternativen für die Verwendung der DLC:
      A) Die optionalen Kennungen MSG ID, TX ID, und VLAN ID im Datenfeld (Data Field) können Teil des Data Fields sein, d.h. die DLC gibt die Länge des Data Fields inkl. der optionalen Kennungen MSG ID, TX ID, und VLAN ID im Data Field an. In anderen Worten heißt das, dass die ersten Bytes des Data Fields die IDs enthalten. Dieser Fall ist in Fig. 8 dargestellt. Es müssen jedoch nicht zwingend die ersten Bytes sein. In diesem Fall muss die Applikation Kenntnis darüber haben, welche Kennungen (IDs) im Datenfeld (Data Field) vorhanden sind und welche Länge sie haben.
      B) Die optionalen Kennungen MSG ID, TX ID, und VLAN ID gelten nicht als Teil des Data Field und der DLC gibt die Länge der User Daten ohne die optionalen Kennungen MSG ID, TX ID, und VLAN ID an. Welche der optionalen Kennungen MSG ID, TX ID, und VLAN ID in einem Rahmen vorhanden sind und welche Länge sie haben, kann dann durch Konfiguration der Kommunikationssteuereinrichtung angegeben werden.

- Zusätzliche Identifier (als Teil des Data Field oder separat)
   ∘ MSG ID
      ▪ Die Message ID identifiziert den Inhalt der Nachricht oder des Rahmens. Mit Hilfe dieser ID kann ein Empfangsknoten erkennen, welche Information in diesem Rahmen ist. Zum Beispiel steht die MSG ID = 0x10 für die Fahrzeuggeschwindigkeit.
      ▪ Diese ID ist optional, d.h. sie kann auch die Länge 0 haben.
      ▪ Die Länge der ID ist idealerweise in der Kommunikationssteuereinrichtung bitweise einstellbar. Z.B. währen 16 bit ein möglicher Wert für die Länge.
   ∘ TX ID
      ▪ Die TX ID identifiziert den Sender der Nachricht oder des Rahmens. D.h. jeder Sendeknoten verwendet eine (oder mehrere) exklusiv zugeteilte ID und fügt diese beim Senden in die Rahmen ein.
      ▪ Diese ID ist optional, d.h. sie kann auch die Länge 0 haben.
      ▪ Die Länge der ID ist idealerweise in der Kommunikationssteuereinrichtung bitweise einstellbar. Z.B. währen 8 bit ein möglicher Wert für die Länge.
   ∘ VLAN ID
      ▪ Die VLAN ID identifiziert das Sub-Netzwerk, in dem diese Nachricht oder dieser Rahmen sichtbar sein soll, bzw. in welches diese Nachricht oder dieser Rahmen weitergeleitet werden soll. Z.B. kann ein Gateway diese VLAN ID auswerten und daraus ableiten, in welche anderen Netzwerke diese Nachricht oder dieser Rahmen weitergeleitet werden soll.
      ▪ Diese ID ist optional, d.h. sie kann auch die Länge 0 haben.
      ▪ Die Länge der ID ist idealerweise in der Kommunikationssteuereinrichtung bitweise einstellbar. Z.B. währen 4 bit ein möglicher Wert für die Länge.

Anwendung der verschiedenen Identifier:
- Priority ID
∘ Jeder Busteilnehmer (im Folgenden auch: Knoten) bekommt exklusiv mindestens eine dedizierte Priority ID zugeteilt.
∘ Idealerweise bekommt jeder Knoten bis zu K Priority IDs exklusiv zugewiesen. Die bis zu K Priority IDs erlauben bis zu K verschiedene Prioritäten (Prioritäts-Klassen) zu definieren. Jede Nachricht/jeder Rahmen, die ein Knoten sendet, bekommt eine Priority ID, die der Priorität der Nachricht/ des Rahmens entspricht.
∘ Beispiel für ein Bussystem mit 4 Knoten und mit max. K=3 Priority IDs pro Knoten:

| | **Priority IDs** | | | |
|---|---|---|---|---|
| | **Hohe Priorität** | **Mittlere Priorität** | **Niedrige Priorität** | **Kommentar** |
| **Knoten 1** | 10 | 20 | 60 | |
| **Knoten 2** | 11 | 21 | 61 | |
| **Knoten 3** | 12 | 22 | 62 | |
| **Knoten 4** | nicht vergeben | 23 | 63 | Dieser Knoten sendet keine Nachrichten mit hoher Priorität und hat deshalb keine Priority ID der Klasse "Hohe Priorität" |

∘ Optional bekommt jeder Knoten mehrere Priority IDs in einer Prioritäts-Klasse. D.h. z.B. bekommt Knoten 1 für die "Mittlere Priorität" die Priority IDs 20, 24, 28 und der Knoten 2 die Priority IDs 21, 25, 29. Wenn jetzt jeder Knoten in einer Prioritäts-Klasse die IDs nach einer bestimmten Regel oder zufällig auswählt, z.B. nach einem Round Robin Verfahren, dann ist z.B. Knoten 1 nicht ständig dem Knoten 2 in der Mittleren Priorität-Klasse überlegen, d.h. Knoten 1 hat nicht immer eine höhere Priorität. Damit erreicht man eine Fairness innerhalb einer Prioritäts-Klasse.
∘ Optional kann, wenn eine Nachricht oder ein Rahmen schon mehrfach die Arbitration verloren hat, nach einer bestimmten Regel auch die Priority ID für diese Nachricht oder diesen Rahmen durch eine Priority ID mit höherer Priorität getauscht werden, damit die Nachricht eine höhere Chance bekommt, die Arbitration zu gewinnen. D.h. in anderen Worten, dass die Zuordnung von Priority ID zu Nachrichten dynamisch erfolgen kann.
- MSG ID
∘ Jede über das Bussystem zu übertragende Information bekommt eine oder mehrere MSG IDs zugewiesen.
∘ Die MSG ID muss nicht exklusiv sein für jeden Knoten. Eine bestimmte MSG ID darf aber nicht für verschiedene Informationen verwendet werden.
∘ Falls die MSG ID exklusiv für einen Knoten vergeben wird, dann kann prinzipiell eine Applikation auf die Übertragung der TX ID verzichten, denn die MSG ID identifiziert implizit auch den Sender.

- TX ID
∘ Jeder Knoten bekommt mindestens eine für den Knoten eindeutige TX ID zugewiesen. Zwei verschiedene Knoten dürfen nicht dieselbe TX ID erhalten.
∘ Die bzw. eine dem Knoten zugewiesene TX ID wird in der Nachricht eingefügt.

- VLAN ID
∘ Der Sendeknoten bestimmt mit der VLAN ID, in welche weiteren verbundenen Netzwerke die jeweilige Nachricht weitergeleitet werden soll. Zusätzlich Z.B. könnte eine bestimmte VLAN ID, wie z.B. die VLAN ID des Wertes 0 auch einen Broadcast, also eine Weiterleitung in alle verbundenen Netzwerke bedeuten.

## Patentansprüche

1. Teilnehmerstation (10; 30) für ein serielles Bussystem (1), mit
einer Kommunikationssteuereinrichtung (11; 31) zum Steuern einer Kommunikation der Teilnehmerstation (10; 30) mit mindestens einer anderen Teilnehmerstation (10; 20; 30) des Bussystems (1), und
einer Sende-/Empfangseinrichtung (12; 32) zum Senden eines von der Kommunikationssteuereinrichtung (11; 31) erzeugten Sendesignals (TXD) auf einen Bus (40) des Bussystems (1), so dass sich für eine Nachricht (45), die zwischen Teilnehmerstationen (10, 20, 30) des Bussystems (1) ausgetauscht wird, die Bitzeit (t_bt) eines in der ersten Kommunikationsphase (451) auf den Bus (40) gesendeten Signals unterscheidet von einer Bitzeit (t_bt) eines in der zweiten Kommunikationsphase (452) gesendeten Signals,
wobei die Kommunikationssteuereinrichtung (11; 31) ausgestaltet ist, das Sendesignal (TXD) gemäß einem Rahmen (450; 450_1; 4500) zu erzeugen, in dem ein Feld für eine Kopfprüfsumme (H_CRC) und ein Feld für eine Rahmenprüfsumme (F_CRC) vorgesehen ist,
wobei die Kommunikationssteuereinrichtung (11; 31) ausgestaltet ist, in dem Rahmen (450; 450_1; 4500) einen Identifizierer vorzusehen, welcher die Priorität zum Senden der ausgetauschten Nachricht (45) auf den Bus (40) angibt, und
wobei die Kommunikationssteuereinrichtung (11; 31) ausgestaltet ist, in dem Rahmen (450; 450_1; 4500) wenigstens einen weiteren Identifizierer vorzusehen,
wobei der wenigstens eine weitere Identifizierer als Nachrichtenkennung (MSG ID) den Inhalt von Daten in einem Datenfeld der ausgetauschten Nachricht (45) angibt oder als Senderkennung (TX ID) die sendende Teilnehmerstation für die ausgetauschte Nachricht (45) angibt oder als Virtualnetzwerkkennung (VLAN ID) eine Weiterleitungsinformation für die ausgetauschte Nachricht (45) angibt.

2. Teilnehmerstation (10; 30) nach Anspruch 1, wobei der wenigstens eine weitere Identifizierer Teil des Datenfeldes ist und ein Datenlängecode (DLC) die Länge des Datenfeldes unter Berücksichtigung der Länge des wenigstens einen weiteren Identifizierers angibt.

3. Teilnehmerstation (10; 30) nach Anspruch 1, wobei der wenigstens eine weitere Identifizierer nicht Teil des Datenfeldes ist und ein Datenlängecode (DLC) die Länge des Datenfeldes ohne Berücksichtigung der Länge des wenigstens einen weiteren Identifizierers angibt.

4. Teilnehmerstation (10; 30) nach einem der vorangehenden Ansprüche, wobei die Länge der Nachrichtenkennung (MSG ID) oder die Länge der Senderkennung (TX ID) oder die Länge der Virtualnetzwerkkennung (VLAN ID) in der Kommunikationssteuereinrichtung (11;31) bitweise einstellbar ist.

5. Teilnehmerstation (10; 30) nach einem der vorangehenden Ansprüche, wobei der für die Nachricht (45) gebildete Rahmen (450; 450_1) kompatibel zu CAN FD aufgebaut ist.

6. Teilnehmerstation (10; 30) nach einem der vorangehenden Ansprüche, wobei in der ersten Kommunikationsphase (451) ausgehandelt wird, welche der Teilnehmerstationen (10, 20, 30) des Bussystems (1) in der nachfolgenden zweiten Kommunikationsphase (452) einen zumindest zeitweise exklusiven, kollisionsfreien Zugriff auf den Bus (40) bekommt.

7. Verfahren zur Kommunikation in einem seriellen Bussystem (1), wobei das Verfahren mit einer Teilnehmerstation (10; 30) des Bussystems (1) ausgeführt wird, die eine Kommunikationssteuereinrichtung (11; 31) und eine Sende-/Empfangseinrichtung (12; 32) aufweist, wobei das Verfahren die Schritte aufweist,
Steuern, mit der Kommunikationssteuereinrichtung (11; 31) einer Kommunikation der Teilnehmerstation (10; 30) mit mindestens einer anderen Teilnehmerstation (10; 20; 30) des Bussystems (1), und
Senden, mit der Sende-/Empfangseinrichtung (12; 32), eines von der Kommunikationssteuereinrichtung (11; 31) erzeugten Sendesignals (TXD) auf einen Bus (40) des Bussystems (1), so dass sich für eine Nachricht (45), die zwischen Teilnehmerstationen (10, 20, 30) des Bussystems (1) ausgetauscht wird, die Bitzeit (t_bt) eines in der ersten Kommunikationsphase (451) auf den Bus (40) gesendeten Signals unterscheidet von einer Bitzeit (t_bt) eines in der zweiten Kommunikationsphase (452) gesendeten Signals,
wobei die Kommunikationssteuereinrichtung (11; 31) das Sendesignal (TXD) gemäß einem Rahmen (450; 450_1; 4500) erzeugt, in dem ein Feld für eine Kopfprüfsumme (H_CRC) und ein Feld für eine Rahmenprüfsumme (F_CRC) vorgesehen ist,
wobei die Kommunikationssteuereinrichtung (11; 31) ausgestaltet ist, in dem Rahmen (450; 450_1; 4500) einen Identifizierer vorzusehen, welcher die Priorität zum Senden der ausgetauschten Nachricht (45) auf den Bus (40) angibt, und
wobei die Kommunikationssteuereinrichtung (11; 31) ausgestaltet ist, in dem Rahmen (450; 450_1; 4500) wenigstens einen weiteren Identifizierer vorzusehen,
wobei der wenigstens eine weitere Identifizierer als Nachrichtenkennung (MSG ID) den Inhalt von Daten im Datenfeld der ausgetauschten Nachricht (45) angibt oder als Senderkennung (TX ID) die sendende Teilnehmerstation für die ausgetauschte Nachricht (45) angibt oder als Virtualnetzwerkkennung (VLAN ID) eine Weiterleitungsinformation für die ausgetauschte Nachricht (45) angibt.

8. Verfahren nach Anspruch 7, wobei der wenigstens eine weitere Identifizierer Teil des Datenfeldes ist und ein Datenlängecode (DLC) die Länge des Datenfeldes unter Berücksichtigung der Länge des wenigstens einen weiteren Identifizierers angibt.

9. Verfahren nach Anspruch 7, wobei der wenigstens eine weitere Identifizierer nicht Teil des Datenfeldes ist und ein Datenlängecode (DLC) die Länge des Datenfeldes ohne Berücksichtigung der Länge des wenigstens einen weiteren Identifizierers angibt.

10. Verfahren nach einem der Ansprüche 7-9, wobei die Länge der Nachrichtenkennung (MSG ID) oder die Länge der Senderkennung (TX ID) oder die Länge der Virtualnetzwerkkennung (VLAN ID) in der Kommunikationssteuereinrichtung (11;31) bitweise einstellbar ist.

11. Verfahren nach einem der Ansprüche 7-10, wobei der für die Nachricht (45) gebildete Rahmen (450; 450_1) kompatibel zu CAN FD aufgebaut ist.

12. Verfahren nach einem der Ansprüche 7-11, wobei in der ersten Kommunikationsphase (451) ausgehandelt wird, welche der Teilnehmerstationen (10, 20, 30) des Bussystems (1) in der nachfolgenden zweiten Kommunikationsphase (452) einen zumindest zeitweise exklusiven, kollisionsfreien Zugriff auf den Bus (40) bekommt.

## Claims

1. Subscriber station (10; 30) for a serial bus system (1), having
a communication control device (11; 31) for controlling communication between the subscriber station (10; 30) and at least one other subscriber station (10; 20; 30) of the bus system (1), and
a transmitting/receiving device (12; 32) for transmitting a transmission signal (TXD) generated by the communication control device (11; 31) onto a bus (40) of the bus system (1), with the result that, for a message (45) exchanged between subscriber stations (10, 20, 30) of the bus system (1), the bit time (t_bt) of a signal transmitted onto the bus (40) in the first communication phase (451) differs from a bit time (t_bt) of a signal transmitted in the second communication phase (452),
wherein the communication control device (11; 31) is configured to generate the transmission signal (TXD) according to a frame (450; 450_1; 4500) in which a field for a header checksum (H_CRC) and a field for a frame checksum (F_CRC) are provided,
wherein the communication control device (11; 31) is configured to provide, in the frame (450; 450_1; 4500), an identifier which indicates the priority for transmitting the exchanged message (45) onto the bus (40), and
wherein the communication control device (11; 31) is configured to provide at least one further identifier in the frame (450; 450_1; 4500),
wherein the at least one further identifier, as a message identifier (MSG ID), indicates the content of data in a data field of the exchanged message (45) or, as a transmitter identifier (TX ID), indicates the transmitting subscriber station for the exchanged message (45) or, as a virtual network identifier (VLAN ID), indicates forwarding information for the exchanged message (45) .

2. Subscriber station (10; 30) according to Claim 1, wherein the at least one further identifier is part of the data field, and a data length code (DLC) indicates the length of the data field, taking into account the length of the at least one further identifier.

3. Subscriber station (10; 30) according to Claim 1, wherein the at least one further identifier is not part of the data field, and a data length code (DLC) indicates the length of the data field, without taking into account the length of the at least one further identifier.

4. Subscriber station (10; 30) according to one of the preceding claims, wherein the length of the message identifier (MSG ID) or the length of the transmitter identifier (TX ID) or the length of the virtual network identifier (VLAN ID) can be set bit by bit in the communication control device (11; 31).

5. Subscriber station (10; 30) according to one of the preceding claims, wherein the frame (450; 450_1) formed for the message (45) is constructed in a manner compatible with CAN FD.

6. Subscriber station (10; 30) according to one of the preceding claims, wherein it is negotiated, in the first communication phase (451), which of the subscriber stations (10, 20, 30) of the bus system (1) receives at least temporarily exclusive, collision-free access to the bus (40) in the subsequent, second communication phase (452) .

7. Method for communicating in a serial bus system (1), wherein the method is carried out using a subscriber station (10; 30) of the bus system (1), which subscriber station has a communication control device (11; 31) and a transmitting/receiving device (12; 32), wherein the method has the steps of
using the communication control device (11; 31) to control communication between the subscriber station (10; 30) and at least one other subscriber station (10; 20; 30) of the bus system (1), and
using the transmitting/receiving device (12; 32) to transmit a transmission signal (TXD) generated by the communication control device (11; 31) onto a bus (40) of the bus system (1), with the result that, for a message (45) exchanged between subscriber stations (10, 20, 30) of the bus system (1), the bit time (t_bt) of a signal transmitted onto the bus (40) in the first communication phase (451) differs from a bit time (t_bt) of a signal transmitted in the second communication phase (452),
wherein the communication control device (11; 31) generates the transmission signal (TXD) according to a frame (450; 450_1; 4500) in which a field for a header checksum (H_CRC) and a field for a frame checksum (F_CRC) are provided,
wherein the communication control device (11; 31) is configured to provide, in the frame (450; 450_1; 4500), an identifier which indicates the priority for transmitting the exchanged message (45) onto the bus (40), and
wherein the communication control device (11; 31) is configured to provide at least one further identifier in the frame (450; 450_1; 4500),
wherein the at least one further identifier, as a message identifier (MSG ID), indicates the content of data in the data field of the exchanged message (45) or, as a transmitter identifier (TX ID), indicates the transmitting subscriber station for the exchanged message (45) or, as a virtual network identifier (VLAN ID), indicates forwarding information for the exchanged message (45).

8. Method according to Claim 7, wherein the at least one further identifier is part of the data field, and a data length code (DLC) indicates the length of the data field, taking into account the length of the at least one further identifier.

9. Method according to Claim 7, wherein the at least one further identifier is not part of the data field, and a data length code (DLC) indicates the length of the data field, without taking into account the length of the at least one further identifier.

10. Method according to one of Claims 7-9, wherein the length of the message identifier (MSG ID) or the length of the transmitter identifier (TX ID) or the length of the virtual network identifier (VLAN ID) can be set bit by bit in the communication control device (11; 31).

11. Method according to one of Claims 7-10, wherein the frame (450; 450_1) formed for the message (45) is constructed in a manner compatible with CAN FD.

12. Method according to one of Claims 7-11, wherein it is negotiated, in the first communication phase (451), which of the subscriber stations (10, 20, 30) of the bus system (1) receives at least temporarily exclusive, collision-free access to the bus (40) in the subsequent, second communication phase (452).

## Revendications

1. Station d'abonné (10 ; 30) pour un système de bus série (1), comprenant
un dispositif de commande de communication (11 ; 31) destiné à commander une communication de la station d'abonné (10 ; 30) avec au moins une autre station d'abonné (10 ; 20 ; 30) du système de bus (1), et
un dispositif d'émission/réception (12 ; 32) destiné à émettre sur un bus (40) du système de bus (1) un signal d'émission (TXD) généré par le dispositif de commande de communication (11 ; 31), de sorte que pour un message (45) qui est échangé entre les stations d'abonné (10, 20, 30) du système de bus (1), le temps de bit (t_bt) d'un signal émis sur le bus (40) dans la première phase de communication (451) est différent d'un temps de bit (t_bt) d'un signal émis dans la deuxième phase de communication (452),
le dispositif de commande de communication (11 ; 31) étant configuré pour générer le signal d'émission (TXD) conformément à une trame (450 ; 450_1 ; 4500) dans laquelle sont prévus un champ pour une somme de contrôle d'en-tête (H_CRC) et un champ pour une somme de contrôle de trame (F_CRC),
le dispositif de commande de communication (11 ; 31) étant configuré pour prévoir dans la trame (450 ; 450_1 ; 4500) un identificateur qui indique la priorité pour émettre sur le bus (40) le message (45) échangé, et
le dispositif de commande de communication (11 ; 31) étant configuré pour prévoir dans la trame (450 ; 450_1 ; 4500) au moins un identificateur supplémentaire,
l'au moins un identificateur supplémentaire indiquant, comme identifiant de message (MSG ID), le contenu de données dans un champ de données du message (45) échangé ou, comme identifiant d'émetteur (TX ID), la station d'abonné émettrice pour le message (45) échangé, ou comme identifiant de réseau virtuel (VLAN ID), une information de retransmission pour le message (45) échangé.

2. Station d'abonné (10 ; 30) selon la revendication 1, l'au moins un identificateur supplémentaire faisant partie du champ de données et un code de longueur de données (DLC) indiquant la longueur du champ de données en tenant compte de la longueur de l'au moins un identificateur supplémentaire.

3. Station d'abonné (10 ; 30) selon la revendication 1, l'au moins un identificateur supplémentaire ne faisant pas partie du champ de données et un code de longueur de données (DLC) indiquant la longueur du champ de données sans tenir compte de la longueur de l'au moins un identificateur supplémentaire.

4. Station d'abonné (10 ; 30) selon l'une des revendications précédentes, la longueur de l'identifiant de message (MSG ID) ou la longueur de l'identifiant d'émetteur (TX ID) ou la longueur de l'identifiant de réseau virtuel (VLAN ID) pouvant être réglée bit par bit dans le dispositif de commande de communication (11 ; 31) .

5. Station d'abonné (10 ; 30) selon l'une des revendications précédentes, la trame (450 ; 450_1) formée pour le message (45) étant structurée compatible avec CAN FD.

6. Station d'abonné (10 ; 30) selon l'une des revendications précédentes, celle des stations d'abonné (10, 20, 30) du système de bus (1) qui obtient, dans la deuxième phase de communication (452) qui suit, un accès au bus (40) au moins temporairement exclusif, sans collision, étant négociée dans la première phase de communication (451).

7. Procédé de communication dans un système de bus série (1), le procédé étant mis en œuvre avec une station d'abonné (10 ; 30) du système de bus (1) qui comprend un dispositif de commande de communication (11 ; 31) et un dispositif d'émission/réception (12 ; 32), le procédé comprenant les étapes suivantes :
commande, avec le dispositif de commande de communication (11 ; 31), d'une communication de la station d'abonné (10 ; 30) avec au moins une autre station d'abonné (10 ; 20 ; 30) du système de bus (1), et
émission, avec le dispositif d'émission/réception (12 ; 32) sur un bus (40) du système de bus (1), d'un signal d'émission (TXD) généré par le dispositif de commande de communication (11 ; 31), de sorte que pour un message (45) qui est échangé entre des stations d'abonné (10, 20, 30) du système de bus (1), le temps de bit (t_bt) d'un signal émis sur le bus (40) dans la première phase de communication (451) est différent d'un temps de bit (t_bt) d'un signal émis dans la deuxième phase de communication (452),
le dispositif de commande de communication (11 ; 31) générant le signal d'émission (TXD) conformément à une trame (450 ; 450_1 ; 4500) dans laquelle sont prévus un champ pour une somme de contrôle d'en-tête (H_CRC) et un champ pour une somme de contrôle de trame (F_CRC),
le dispositif de commande de communication (11 ; 31) étant configuré pour prévoir dans la trame (450 ; 450_1 ; 4500) un identificateur qui indique la priorité pour émettre sur le bus (40) le message (45) échangé, et
le dispositif de commande de communication (11 ; 31) étant configuré pour prévoir dans la trame (450 ; 450_1 ; 4500) au moins un identificateur supplémentaire,
l'au moins un identificateur supplémentaire indiquant, comme identifiant de message (MSG ID), le contenu de données dans le champ de données du message (45) échangé ou, comme identifiant d'émetteur (TX ID), la station d'abonné émettrice pour le message (45) échangé, ou comme identifiant de réseau virtuel (VLAN ID), une information de retransmission pour le message (45) échangé.

8. Procédé selon la revendication 7, l'au moins un identificateur supplémentaire faisant partie du champ de données et un code de longueur de données (DLG) indiquant la longueur du champ de données en tenant compte de la longueur de l'au moins un identificateur supplémentaire.

9. Procédé selon la revendication 7, l'au moins un identificateur supplémentaire ne faisant pas partie du champ de données et un code de longueur de données (DLC) indiquant la longueur du champ de données sans tenir compte de la longueur de l'au moins un identificateur supplémentaire.

10. Procédé selon l'une des revendications 7 à 9, la longueur de l'identifiant de message (MSG ID) ou la longueur de l'identifiant d'émetteur (TX ID) ou la longueur de l'identifiant de réseau virtuel (VLAN ID) pouvant être réglée bit par bit dans le dispositif de commande de communication (11 ; 31).

11. Procédé selon l'une des revendications 7 à 10, la trame (450 ; 450_1) formée pour le message (45) étant structurée compatible avec CAN FD.

12. Procédé selon l'une des revendications 7 à 11, celle des stations d'abonné (10, 20, 30) du système de bus (1) qui obtient, dans la deuxième phase de communication (452) qui suit, un accès au bus (40) au moins temporairement exclusif, sans collision, étant négociée dans la première phase de communication (451).
